Europäisches Patentamt

European Patent Office

Office européen des brevets

(11) Veröffentlichungsnummer: **0 215 825**
**B1**

(12) # EUROPÄISCHE PATENTSCHRIFT

(45) Veröffentlichungstag der Patentschrift:
16.08.89

(51) Int. Cl.⁴: **G 02 B 21/00, G 03 B 17/48**

(21) Anmeldenummer: **86901340.9**

(22) Anmeldetag: **17.02.86**

(86) Internationale Anmeldenummer:
**PCT/DE 86/00057**

(87) Internationale Veröffentlichungsnummer:
**WO 86/05000 (28.08.86 Gazette 86/19)**

(54) **VERFAHREN UND VORRICHTUNG ZUM EINGEBEN, SICHTBARMACHEN UND/ODER REGISTRIEREN EINES VARIABLEN MESSFLECKES IN EINEN STRAHLENGANG EINER KAMERA FÜR OPTISCHE GERÄTE.**

(30) Priorität: **23.02.85 DE 3506492**

(43) Veröffentlichungstag der Anmeldung:
**01.04.87 Patentblatt 87/14**

(45) Bekanntmachung des Hinweises auf die Patenterteilung:
**16.08.89 Patentblatt 89/33**

(84) Benannte Vertragsstaaten:
**AT CH DE FR GB LI**

(56) Entgegenhaltungen:
EP-A- 0 088 985
EP-A- 0 119 857
EP-A- 0 164 680
CH-A- 526 096
DE-A- 2 908 334
DE-A- 3 410 350
FR-A- 1 544 955
FR-A- 2 388 289
US-A- 3 633 482

Die Akte enthält technische Angaben, die nach dem Eingang der Anmeldung eingereicht wurden und die nicht in dieser Patentschrift enthalten sind.

(73) Patentinhaber: **Wild Leitz GmbH,
Ernst-Leitz-Strasse 30 Postfach 20 20,
D-6330 Wetzlar 1 (DE)**

(72) Erfinder: **LEITER, Herbert, Mühlrain 1,
D-6330 Wetzlar 1 (DE)**

## Beschreibung

Die Erfindung betrifft ein Verfahren zum Eingeben und/oder Sichtbarmachen und/oder Registrieren mindestens eines form-, größen- und ortsvariablen Meßfleckes in den(m) Beobachtungs- und/oder Aufnahme- und/oder Meßstrahlengang einer Kamera für optische Geräte, insbesondere Mikroskope, sowie eine Vorrichtung zur Durchführung dieses Verfahrens.

Aus der DE-PS 2 619 853 ist eine Aufsatzkamera mit Belichtungsmessung für Mikroskope zur fotografischen Fixierung eines Objektes bzw. Objektdetails bekannt. Bei dieser bekannten Einrichtung ist eine das Detail-Meßfeld definierende Meßfeldblende in einer zum Okularzwischenbild konjugierten Ebene mechanisch verstellbar angeordnet.

Diesem Stand der Technik haften mehrere Nachteile an. So kann die Detailmeßfeldblende zwar größen-, form- und ortsvariant gehaltert werden; es sind aber lediglich speziell vorgegebene Blendengeometrien, wie Quadrate, Rechtecke oder Kreisflächen, durch mechanische Verstellung von Blendensegmenten zu realisieren. Eine individuelle Formanpassung der Detailmeßfeldblende an die Geometrie eines beispielsweise gewinkelt ausgebildeten Objektdetails (z.B. «Bumerang»-Form) bzw. eines Objektdetails mit unsymmetrischen, unregelmäßigen, polygonalen Ein- und Ausbuchtungen ist dagegen nicht möglich. Ein gravierender Nachteil besteht weiterhin darin, daß mechanische Verstellmittel für die Detailmeßfeldblende selbst bzw. für ihre einzelnen Segmente vorgesehen sein müssen.

Es ist daher die Aufgabe der vorliegenden Erfindung, ein Verfahren der eingangs genannten Art anzugeben, bei dem die beschriebenen Nachteile prinzipiell nicht mehr auftreten können; das darüber hinaus variantenreicher einsetzbar, auf alle auftretenden Objektdetail-Formen optimal einstellbar und vor allem mit einer erweiterten Belichtungsdynamik ausgestattet ist.

Diese Aufgabe wird bei dem erfindungsgemäßen Verfahren zum Eingeben und/oder Sichtbarmachen und/oder Registrieren mindestens eines form-, größen- und ortsvariablen Meßflecks in den(m) Beobachtungs- und/oder Aufnahme- und/oder Meßstrahlengang einer Kamera für optische Geräte, insbesondere Mikroskope, in der in den Ansprüchen 1 bzw. 4 gekennzeichneten Weise gelöst.

Schließlich wird die Aufgabe auch durch eine Vorrichtung zur Durchführung eines der angegebenen Verfahren gelöst, bestehend aus einem optischen Beobachtungsgerät mit zugeordneter Kamera — insbesondere einer mit einem Mikroskop zusammenwirkenden Aufsatz- oder Einbaukamera — mit einer Einrichtung zur Messung der Helligkeit eines Objektdetails und mit Mitteln zur Sichtbarmachung des Detailfeldes und/oder des Objektbildes in der Zwischenbildebene des Okulars des optischen Beobachtungsgerätes, wobei eine das Detailmeßfeld definierende Detailmeßfeldblendenanordnung in einer Funktionsebene, die eine zum Okularzwischenbild konjugierte Ebene ist, in einem Meßstrahlengang angeordnet ist, der über einen Strahlenumlenker, welcher sich in der optischen Achse des Beobachtungsgerätes befindet, mit dem Abbildungsstrahlengang optisch gekoppelt ist, und wobei — gegebenenfalls — ein Strahlenteiler im Meßstrahlengang angeordnet ist, der Formatmarkierungen, Schärfekreuze usw. in den Meß- bzw. Beobachtungsstrahlengang einspiegelt, die im Anspruch 18 gekennzeichnet ist.

Bei den erfindungsgemäßen Verfahren kann zusätzlich vorgesehen sein, daß die die Belichtungszeit bestimmenden Meßwerte gespeichert und mit ihrer Hilfe Mehrfachbelichtungen einunddesselben Objektes durchgeführt werden. Es ist auch möglich, daß der ansteuerbare geometrische Teilbereich aus mindestens einem Feld bzw. mindestens einer Zeile der Mehrfeldermatrix bzw. des Dioden-Arrays oder daß der ansteuerbare Teilbereich aus mindestens einer in der Mehrfeldermatrix bzw. in dem Dioden-Array örtlich benachbarten Gruppe von Feldern bzw. Zeilen besteht. Mit Vorteil steuert der Prozessor für die Ermittlung der optimalen Form, der Größe und des Ortes des Meßfleckes die zu einer Zeile gehörenden Felder der Mehrfeldermatrix gleichzeitig hell, so daß nacheinander alle Horizontal-Zeilen und anschließend alle Vertikal-Zeilen angesteuert werden, wobei ein in Abhängigkeit von dem jeweiligen Bildstrukturdetail unterschiedlich hohes Meßsignal von jeder Zeile gespeichert und anschließend von dem Rechner gewertet und danach die Hellsteuerung nur derjenigen Felder erfolgt, die Objektbild-Strukturen bzw. Strukturanteile aufweisen. Nach einer weiteren Ausgestaltung der erfindungsgemäßen Verfahren können dem Rechner für die Ermittlung der gewünschten Form, der Größe und der Lage des Meßfleckes bzw. der Meßflecke für Registrierzwecke verwertbare Kontrastbereiche unter Berücksichtigung der Graustufenempfindlichkeit des jeweils in der Kamera des optischen Gerätes verwendeten Films vorher eingegeben (vorprogrammiert) werden. Andererseits kann dem Rechner für die Ermittlung der gewünschten Form, der Größe und der Lage des Meßfleckes bzw. der Meßflecke der für Registrierzwecke verwertbare Kontrastbereich auch manuell unter Anpassung an die Graustufenempfindlichkeit des jeweils in der Kamera des optischen Gerätes verwendeten Films eingegeben werden.

Nach einer weiteren Ausführungsvariante kann dem Rechner in Abhängigkeit vom jeweils verwendeten Filmmaterial ein Programmkorrekturfaktor für eine wahlweise stärkere Berücksichtigung und Bewertung der Signal-Maximalwerte (bei Positiv-Filmen) oder aber der Signal-Minimalwerte (bei Negativ-Filmen) eingegeben werden.

Auch ist es möglich, daß der Rechner etwaige Transmissionsinhomogenitäten einzelner in Wirkstellung befindlicher Felder bzw. Zeilen der Mehrfeldermatrix oder des Dioden-Arrays sowie den optisch bedingten Helligkeitsabfall zum Sehfeldrand automatisch korrigiert bzw. kompensiert. Die vom Prozessor angesteuerten Felder oder Zeilen können einzeln oder gruppenweise ihre Transmissionscharakteristik in schneller und vorgebbarer Intervallfolge alternierend ändern. Nach einer vorteilhaften Weiterbildung der vorliegenden Erfindung kann (können) die Form(en), die Größe(n) und der (die) Ort(e) des Meßfleckes (der Meßflecke) manuell durch Abfahren der Kontur(en) des Objektbildes bestimmt und sodann abgespeichert werden. Auch ist es möglich, daß der Prozessor zunächst ein im Zentralbereich der Mehrfeldermatrix liegendes Feld und sodann die daran angrenzenden Felder nacheinander — wahlweise einzeln oder in Gruppen — hellsteuert. Dabei kann die sukzessive Hellsteuerung der aneinandergrenzenden Felder vorteilhafterweise entlang einer vom Zentrum der Mehrfeldermatrix ausgehenden spiralförmigen Linie erfolgen.

Die erfindungsgemäße Vorrichtung kann derart getroffen sein, daß der Mehrfeldermatrix ein Prozessor zugeordnet ist, der mit einer Speicher- und Rechnereinheit verbunden ist, welche ihrerseits mit dem Prozessor und mit einem Steuergerät in funktioneller Verbindung steht, das einen in der Kamera vorhandenen Verschluß nach Maßgabe der ermittelten Helligkeitsmeßwerte steuert.

Bei einer besonders vorteilhaften Ausführungsform der vorliegenden Erfindung ist im Bereich des Meßstrahlengangs zusätzlich zur Mehrfeldermatrix in einer weiteren, zur Okularzwischenbildebene konjugierten Ebene ein Dioden-Array angeordnet, wobei dessen Einzeldioden mit den entsprechenden Feldern der Mehrfeldermatrix koordinatenmäßig verknüpft sind. Das Dioden-Array kann in analoger Weise wie die Mehrfeldermatrix mit dem Prozessor der Rechner- und Speichereinheit sowie dem Steuergerät verknüpft sein. Bei einer weiteren Variante der erfindungsgemäßen Vorrichtung kann der Strahlenumlenker ein rotierender Sektorspiegel sein, welcher derart im Abbildungsstrahlengang angeordnet ist, daß dessen jeweils in Wirkstellung befindlicher, vollverspiegelter Sektor den Meßstrahlengang in Richtung auf die Mehrfeldermatrix umlenkt, und daß in der optischen Achse des Beobachtungsgerätes ein ein- und ausschiebbar gehaltener Spiegel mit in Richtung zur Filmebene nachgeordneter und mit dem Spiegel mechanisch verbundenen Dunkelklappe zwischen dem Verschluß und dem Kameraobjektiv vorgesehen ist, welcher in Wirkstellung einen separaten Teilstrahlengang in die optische Achse des Beobachtungsgerätes zunächst in Richtung auf das Objekt umlenkt. Dabei kann die Einrichtung so getroffen sein, daß der Teilstrahlengang von einer Lichtquelle ausgeht, der als weitere optische Bauelemente eine Feldlinse, eine mit geometrischen Kennungen, insbesondere mit Strich- und Formatmarkierungen, versehene Platte und sodann eine weitere Linse nachgeordnet sind. Die Mehrfeldermatrix kann aus einem elektrooptischen oder ferroelektrischen oder magnetooptischen Material bestehen. Nach einer besonders bevorzugten Ausführungsform ist sie eine Flüssigkristallmatrix. Im speziellen Fall kann die Mehrfeldermatrix nematische Flüssigkristalle mit positiver dielektrischer Anisotropie enthalten. Ebenso kann sie eine elektrochrome oder eine elektrophoretische Matrix sein. Auch ist es möglich, daß die einzelnen Felder(gruppen) oder Zeilen(gruppen) der Mehrfeldermatrix aus unterschiedlichen Matrix-Materialien bestehen. Dabei kann die Mehrfeldermatrix derart ausgebildet sein, daß sich die unterschiedlichen Matrix-Materialien auf die einzelnen Felder(gruppen) bzw. Zeilen(gruppen) der Mehrfeldermatrix derart verteilen, daß jeweils — vorzugsweise zentrosymmetrische — Zonen bzw. Sektoren bzw. anderweitig geometrisch strukturierte — beispielsweise schachbrettartige — Matrixteilbereiche gleicher Flächengröße, jedoch unterschiedlicher Matrixmaterialausstattung einander abwechseln. Vorteilhafterweise sind alle Einzelfelder der Mehrfeldermatrix von gleicher Geometrie und weisen einen gleichgroßen Flächeninhalt auf. Die geometrische Form jedes Einzelfeldes kann ein Quadrat bzw. ein Rechteck bzw. eine Raute bzw. ein Parallelogramm bzw. ein Trapez bzw. ein Dreieck bzw. ein Sechseck sein. Für besondere Meßverfahren kann es zweckmäßig sein, daß alle Einzelfelder der Mehrfeldermatrix bei gleichgroßen Flächeninhalten voneinander abweichende Flächengeometrien aufweisen. Andererseits sind auch Varianten vorteilhaft, bei denen einige der Einzelfelder der Mehrfeldermatrix als flächengrößengleiche Formatbegrenzungs- oder Zentriersymbole — beispielsweise als Strichkreuz(e), Pfeil(e), «L»-oder «V»-förmige(r) Winkel, 90°-Bogen, Kreisring(e) usw. — ausgebildet und vorzugsweise punktsymmetrisch bezüglich des Mehrfeldermatrix-Zentrums auf der Mehrfeldermatrix angeordnet sind. Die Mehrfeldermatrix kann eine von ihrem Zentrum radialstrahlig ausgehende Polkoordinatenstruktur aufweisen, wobei alle entstehenden Einzelfelder zweckmäßigerweise von gleichgroßem Flächeninhalt sind. Schließlich kann die erfindungsgemäße Vorrichtung auch derart getroffen sein, daß mindestens zwei Mehrfeldermatrizen gleicher oder unterschiedlicher geometrischer bzw. physikochemischer Ausbildung sandwichartig aufeinandergeschichtet, separat von dem Prozessor ansteuerbar und bifunktionell miteinander verknüpfbar im Meßstrahlengang angeordnet sind.

In den Zeichnungen werden Ausführungsbeispiele der vorliegenden Erfindung schematisch dargestellt. Es zeigen:

Fig. 1 erste Variante einer Aufsatzkamera für Mikroskope mit Mehrfeldermatrix und separater Formatmarkierung;

Fig. 2 eine Aufsatzkamera für Mikroskope mit Mehrfeldermatrix ohne Formatmarkierung;

Fig. 3 eine zweite Variante einer Aufsatzkamera für Mikroskope mit Mehrfeldermatrix und separater Formatmarkierung;

Fig. 4 eine Aufsatzkamera für Mikroskope mit Mehrfeldermatrix ohne Formatmarkierung und ohne Bildrückspiegelung;

Fig. 5 eine dritte Variante einer Aufsatzkamera für Mikroskope mit Mehrfeldermatrix und separater Formatmarkierung;

Fig. 6 eine Aufsatzkamera für Mikroskope mit Mehrfeldermatrix und mit einem Dioden-Array als Lichtempfänger;

Fig. 7 eine Detailansicht des in Fig. 5 gezeigten rotierenden Spiegels.

Über einem Mikroskop-Objektiv 1 ist ein Tubus-Strahlenteiler 27 angeordnet, der die vom Objekt 3 kommenden Strahlen teilweise in ein Beobachtungsokular 31 reflektiert. Dieser zum Beobachter 34 führende Teilstrahlengang ist der eigentliche Beobachtungsstrahlengang. Eine Feldblende 30 ist zwischen dem Beobachtungsokular 31 und dem Tubus-Strahlenteiler 27 in einer Zwischenbildebene angeordnet. Der durch den Tubus-Strahlenteiler 27 tretende Strahlenteil gelangt in ein Fotookular 5 und von dort aus über eine depolarisierend wirkende Quarzplatte 32 durch einen ersten Strahlenteiler 6 und einen Kameraverschluß 7 in ein Kameraobjektiv 9 und danach zur Filmebene 10. Dieser — im vorliegenden Fall vertikale — Teilstrahlengang ist der eigentliche Abbildungsstrahlengang. Er wird durch die strichpunktierte optische Achse des Gesamtsystems dargestellt, wobei die optische Achse des Mikroskops und diejenige der Kamera mit derjenigen des Gesamtsystems zusammenfällt.

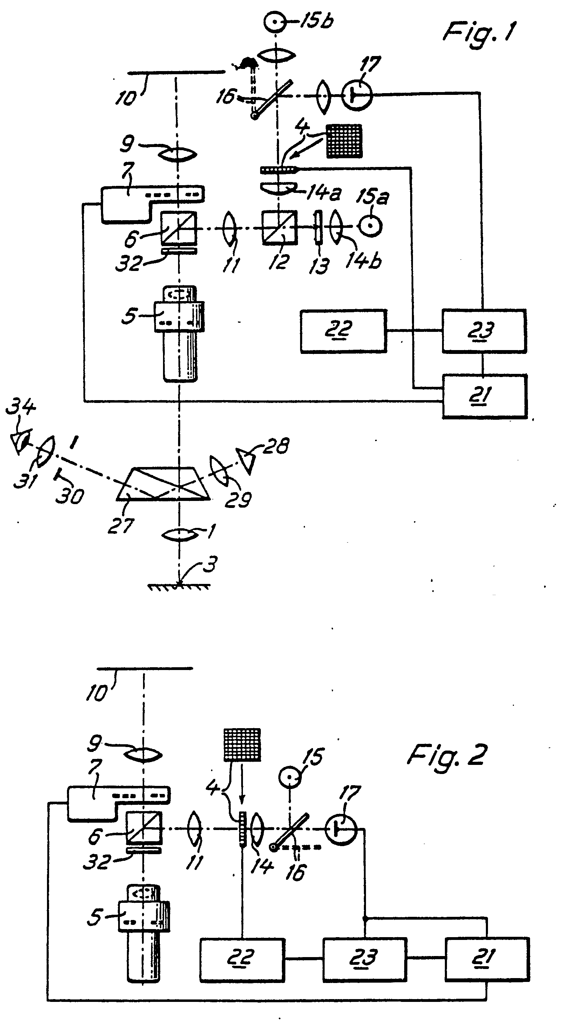

Am ersten Strahlenteiler 6 wird ein Meßstrahlengang als Teilstrahlengang abgezweigt, der durch ein Meßobjektiv 11, einen zweiten Strahlenteiler 12 und nach erfolgter Umlenkung weiter durch eine Feldlinse 14a und durch eine in einer Zwischenbildebene angeordnete und als Detailmeßfeldblende wirkende Mehrfeldermatrix 4 tritt. Danach trifft das Meßstrahlenbündel auf einen Klappspiegel 16, der in zwei Endstellungen schwenkbar ist. Anstelle eines Klappspiegels 16 kann beispielsweise auch ein Drehspiegel verwendet werden. Im dargestellten Fall lenkt der Klappspiegel 16 den Meßstrahl zu einem Lichtempfänger 17, beispielsweise einen Sekundärelektronenvervielfacher. Diese Stellung dient gleichzeitig dazu, einen Beleuchtungsstrahlengang, der von einer Lichtquelle 15b ausgeht und eine nicht näher bezeichnete Linse durchdringt, abzudecken bzw. auszublenden. In der anderen Endstellung des Klappspiegels 16, die gestrichelt dargestellt ist, gewährleistet er eine aus der Sicht des Beobachters 34 bzw. des Objektes 3 rückwärtige — also eine «von hinten» erfolgende — Beleuchtung der Mehrfeldermatrix-Detailmeßfeldblende. Nach Maßgabe der jeweils geöffneten, d.h. auf Transparenz geschalteten, Felder der Mehrfeldermatrix 4 wird ein erstes Bild dieser «Blende» in der Zwischenbildebene des Fotookulars 5 entworfen. Danach verlaufen die Strahlen weiter in Richtung auf das Objekt 3 und werden an der Reflexionsfläche des Tubus-Strahlenteilers 27 reflektiert; gelangen von dort aus über eine Abbildungslinse 29 zu einem Tripelprisma 28, sodann wieder durch die Abbildungslinse 29 und durch den Tubus-Strahlenteiler in das Beobachtungsokular 31, wo ein zweites Bild der «Blende» entsteht. Durch Überlagern dieses «Blenden»-Bildes mit dem Objektbild in der Okular-Zwischenbildebene kann der Beobachter 34 erkennen, von welchem Objekt-Detail die Strahlen durch die Mehrfeldermatrix-«Blende» zum Lichtempfänger 17 gelangen, wenn der Klappspiegel 16 in der in Fig. 1 gezeigten Wirkstellung steht.

Neben dem zweiten Strahlenteiler 12 ist eine Strichplatte 13 angeordnet, die Formatmarkierungen und ein Schärfekreuz enthält. Diese Strichplatte 13 wird ebenfalls «von hinten» über eine Feldlinse 14b von einer Lichtquelle 15a beleuchtet. Ein Bild dieser Strichplattenmarkierung wird ebenfalls im Beobachtungsokular 31 entworfen, wobei dieser zweite Beleuchtungsteilstrahlengang ab dem zweiten Strahlenteiler 12 genauso verläuft wie der zuvor beschriebene «Blenden»-Beleuchtungsteilstrahlengang.

Die Mehrfeldermatrix kann aus einer Vielzahl von einzelnen Feldern zusammengesetzt sein. Vorzugsweise haben die Felder eine quadratische Form. Es sind aber auch rechteckige, trigonale, hexagonale, kreisförmige, sektorale, bogenförmige oder andere polygonale Felder-Geometrien möglich. Die Felder sind in horizontalen Reihen bzw. in vertikalen Spalten angeordnet, so dass beispielsweise eine Schachbrett-«Matrix» resultiert. Es sind aber auch andere Felder-Anordnungen möglich, beispielsweise in Form von Spiralen (abgewinkelt oder «quasi»-sphärisch), von radialstrahligen Segmenten mit konzentrischen Kreis-Unterteilungen (innerer Ring, mittlere Ringe, äußerer Ring), in Form einer hexagonalen «Bienenwaben»-Struktur, in Form einer «Kreis»-Matrix u.a. Bezüglich weiterer Einzelheiten der Mehrfeldermatrix wird auf die weiter oben bereits gemachten Ausführungen verwiesen.

Die Mehrfeldermatrix 4 ist mit einem Prozessor 22 verbunden. Wird ein Objekt 3 auf die Mehrfeldermatrix 4 abgebildet, dann tritt der Prozessor 22 in Funktion und steuert nach Betätigung einer nicht dargestellten Auslösetaste alle Felder der Mehrfeldermatrix 4 einzeln der Reihe nach «hell», also auf Transmission. Dasjenige Licht, welches durch das jeweils geöffnete Feld gelangt, wird vom Lichtempfänger 17 gleichzeitig gemessen und die erhaltenen Meßwerte sodann einem Rechner 23 zugeführt. Der Rechner 23, der außerdem einen Speicher enthält, wertet die einzelnen gemessenen Helligkeitssignale aus und speichert die Meßwerte derjenigen Felder, die Objektbild-Strukturen bzw. Objektbild-Strukturdetails aufweisen. Danach steuert der Prozessor 22 all diejenigen Felder der Mehrfeldermatrix 4, die die ermittelten Objektbild-Strukturen bzw. -Strukturanteile aufweisen, hell. Damit wird eine individuell auf die Objektbild-Bedürfnisse abgestellte Detailmeßfeldblenden-Kontur erzeugt. Im Zusammenwirken mit dem Lichtempfänger 17 ermittelt der Rechner 23 sodann die optimale Belichtungszeit durch Bestimmung des Verhältnisses der hellgesteuerten Felder zur Gesamtzahl aller Felder der Mehrfeldermatrix 4 sowie durch Berücksichtigung der Geometrie der hellgesteuerten Teilbereiche der Mehrfeldermatrix 4. Die so ermittelten Belichtungszeitwerte werden über ein Steuergerät 21 einem als fotografischer Verschluß-Steuerteil ausgebildeten Kameraverschluß 7 zugeführt, welcher sodann in bekannter Weise in Funktion tritt. Mit diesem Verfahrensablauf ist die grundsätzliche Wirkungsweise der vorliegenden Erfindung dargestellt.

Bei bestimmten Objekten kann es erforderlich oder zumindest zweckmäßig sein, daß der Beobachter 34 das Objektbild mit dem erzeugten Meßfleckbild (Bild der Mehrfeldermatrix-«Blende») visuell vergleicht. Dies gelingt in der bereits beschriebenen Weise mittels des von der Lichtquelle 15b ausgehenden Beleuchtungsstrahlenbündels bei aus dem Strahlengang geschwenktem Klappspiegel 16.

In den Fig. 2 bis 5 und 6 wurde aus Vereinfachungsgründen die eigentliche Mikroskopoptik weggelassen. Prinzipiell ist der in Fig. 1 gezeigte Teil mit den Bezugsziffern 1, 3, 27 - 31 und 34 jeweils unterhalb des immer dargestellten Fotookulars 5 vorzusehen. Allerdings kann an Stelle eines Tubus-Strahlenteilers 27 mit zugeordnetem Tripelprisma 28 im Einzelfall auch ein herkömmliches Strahlumlenkelement treten, wobei dann allerdings keine höhen- und seitenrichtige Einspiegelung der Detailmeßfeldblende erfolgt. In Figur 2 ist eine vereinfachte Version des in Figur 1 Dargestellten gezeigt. Die Strichplatte mit den Formatmarkierungen ist weggelassen. Der optische Mikroskopteil unterhalb des Fotookulars 5 entspricht dem in Figur 1 gezeigten Tei. Allerdings kann hier auch eine Version ohne Rückspiegelung vorgesehen sein. Diese Einfachvariante bietet sich beispielsweise dann an, wenn die erfindungsgemäße Gesamtvorrichtung an ein kommerzielles Mikroskop adaptiert werden soll, welches keine Einrichtung zur Rückspiegelung im Tubus besitzt («Fremdfabrikat»).

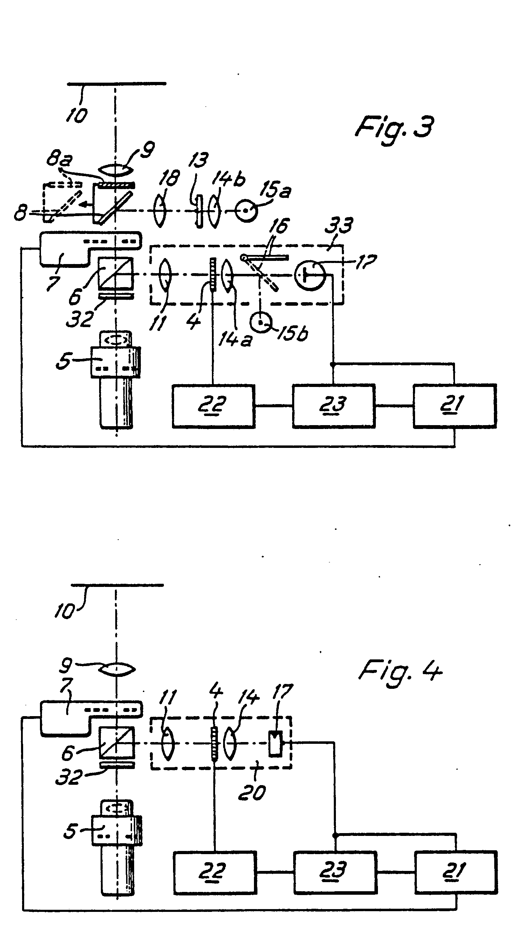

In Figur 3 ist eine weitere Ausführungsform gezeigt. Sie weist gegenüber der in Figur 1 dargestellten Vorrichtung eine erweiterte Belichtungsdynamik auf. Es entfällt der zweite Strahlenteiler 12 (vgl. Figur 1), wodurch ein erhöhter Lichtgewinn erzielt wird. Im kameraseitigen Strahlengang ist zwischen dem Verschluß 7 und dem Kameraobjektiv 9 eine aus einem Spiegel 8 und einer Dunkelklappe 8a bestehende, aus dem Strahlengang herausschiebbare Bauteile-Kombination dargestellt, die in Wirkstellung die rückwärtige Einspiegelung des von der Lichtquelle 15a ausgehenden Strichplatten-Beleuchtungsstrahlengangs ermöglicht. Die Rückspiegelung der Formatmarkierung erfolgt also durch den geöffneten Kameraverschluß 7 bei geschlossener Dunkelklappe 8a.

In Fig. 4 ist eine weitere Einfach-Ausführung gezeigt. Eine Bildrückspiegelung ist nicht vorgesehen. Das Meßobjektiv 11, die Mehrfeldermatrix 4, die Feldlinse 14 und der Lichtempfänger 17 sind in einem Modul 20 angeordnet. Dieser Modul 20 ist auswechselbar gegen eine normale Belichtungsmeß- und steuereinrichtung. Es ist möglich, den Strahlenteiler 6 drehbar oder schiebbar zu haltern. Damit ist diese beschriebene Variante für Mikroskope interessant, die zwar keine Bildrückspiegelung, aber ein separates Einblickfernrohr besitzen.

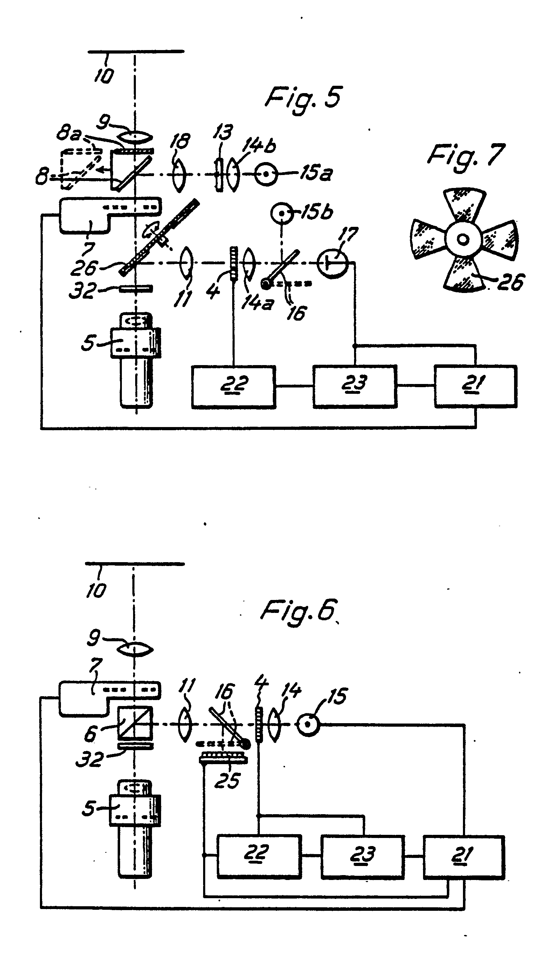

Die Fig. 5 zeigt in Verbindung mit Fig. 7 eine Ausführungsform mit nochmals erweiterter Belichtungsdynamik gegenüber den in den Figuren 1 bzw. 3 gezeigten Varianten. Durch das Weglassen jeglicher Strahlenteiler wird ein enormer Helligkeitsgewinn erhielt, der sich insbesondere bei fluoreszierenden Präparaten geringer Lichtstärke außerordentlich bemerkbar macht. Der obere, von der Lichtquelle 15a ausgehende Beleuchtungsstrahlengang entspricht der in Fig. 3 gezeigten Anordnung; der eigentliche Mikroskopteil entspricht der in Figur 1 gezeigten Anordnung. Anstelle des ersten Strahlenteilers 6 befindet sich ein rotierender Sektorspiegel 26, der in Figur 7 in Draufsicht gezeigt ist. Die Darstellung in Figur 5 zeigt die Funktion der Mitbeobachtung der «Blende». Während der «Fotografier»-Stellung werden die Dunkelklappe 8a, der Spiegel 8 sowie der Klappspiegel 16 aus den jeweiligen Strahlengängen geschwenkt, während der Sektorspiegel 26 rotiert und abwechselnd das Licht für die Messung bzw. für die Belichtung des Films 10 freigibt. Weitere Vorteile dieser Ausführungsform sind: Dunkelstromkompensation in den Dunkelphasen des pulsierenden Lichtstroms; bessere Erkennbarkeit des Rückgespiegelten («Blinken»); wahlweise kann der volle Lichtstrom zur Kamera gelangen oder zur Messung ausgenutzt werden.

In der Figur 6 ist eine Aufsatzkamera für optische Geräte — der Mikroskopteil unterhalb des Fotookulars 5 entspricht wiederum der in Figur 1 gegebenen Darstellung — gezeigt, in der ein Dioden-Array 25 als Lichtempfänger vorgesehen ist. Das Dioden-Array 25 befindet sich — wie auch die Mehrfeldermatrix 4 in allen dargestellten Figuren — in einer zur Okularzwischenbildebene konjugierten Ebene. Das Dioden-Array 25 entspricht hinsichtlich seiner Einzelfelder-Geometrien bzw. hinsichtlich der Felder-Anordnung der Mehrfeldermatrix 4. Durch rückwärtige Beleuchtung der Mehrfeldermatrix 4 mittels der Lichtquelle 15 bei weggeklapptem Spiegel 16 und Hellsteuerung derjenigen Felder der Mehrfeldermatrix 4, die den entsprechenden Feldern auf dem Dioden-Array 25 entsprechen, welche bei dem zuvor abgelaufenen Meßvorgang mit Licht beaufschlagt wurden, wird dem Beobachter 34 die jeweilige Detailmeßfeldblendenform sowie ihre Relativlage bezüglich des gesamten Objektbildes sichtbar gemacht.

Der Verfahrensablauf ist dabei folgender: Das in einer ersten, zur Okularzwischenbildebene konjugierten Ebene vorgesehene Dioden-Array 25 und die in einer zweiten, zur Okularzwischenbildebene konjugierten Ebene vorgesehene Mehrfeldermatrix 4 werden derart vom Prozessor 22 angesteuert, daß sich die Meßfeldcharakteristik des Dioden-Arrays und die Transmissionscharakteristik der Mehrfeldermatrix 4 spontan reversibel gemäß den nachfolgenden Verfahrensschritten ändert: Nachdem das Objekt 3 auf das Dioden-Array 25 abgebildet wurde, steuert der Prozessor nach Betätigung einer nicht mit dargestellten Meßtaste alle Felder des Dioden-Arrays 25 einzeln nacheinander an, wobei gleichzeitig das auf das jeweils angesteuerte Einzelfeld gelangende Licht gemessen und die erhaltenen Einzelmeßwerte dem Rechner 23 zugeführt werden. Der Rechner 23 wertet die gemessenen Helligkeitssignale aus und speichert die Meßwerte derjenigen Felder des Dioden-Arrays 25, die Objektbildstrukturen bzw. Objektbildstrukturanteile aufweisen. Sodann ermittelt der Rechner die optimale Belichtungszeit durch Bestimmung des Verhältnisses der Felder mit Objektbildstruktur zur Gesamtzahl aller Felder, durch Bestimmung der Größe des Meßsignals und durch die Berücksichtigung der Geometrie der an der Messung beteiligten Felder des Dioden-Arrays 25. Sodann vergleicht der Beobachter 34 visuell das Bild des Objektes 3 mit dem auf der Mehrfeldermatrix 4 dargestellten bzw. errechneten Detailmeßfeldblenden-Bild durch optisches Überlagern beider Bilder in der Okularzwischenbildebene des optischen Gerätes durch rückwärtige Beleuchtung der Mehrfeldermatrix 4 mittels der Lichtquelle 15. Die vom Rechner 23 ermittelten Belichtungszeitwerte werden sodann dem Kameraverschluß 7 zugeführt und angezeigt, welcher danach in bekannter Weise nach Betätigung einer nicht mit dargestellten Auslösetaste in Funktion tritt. Weitere Durchführungsvarianten der erfindungsgemäßen Verfahren sowie der entsprechenden Vorrichtungen sind in den Ansprüchen und in dem Beschreibungsteil weiter oben ausführlich dargelegt. In speziellen Fällen kann es zweckmäßig sein, daß einige der beispielsweise schachbrettförmig angeordneten quadratischen Felder der Mehrfeldermatrix 4 andere geometrische Grundformen darstellen, vgl. Anspruch 36, wobei aber die Bedingung eingehalten werden sollte, daß die Fläche jeder dieser Spezial-Felder mit der Fläche jedes der Normal-Felder übereinstimmt. Auf diese Weise können einige Spezial-Felder beispielsweise als optische Formatbegrenzer eingesetzt werden, wenn der Prozessor 22 lediglich vier Winkelfelder, die gewissermaßen einen Leuchtrahmen darstellen, auf Transmission steuert. Auch andere Kennungen, wie Kreuze, Bögen, Segmente, Matrix-Zentrum, usw. sind auf diese Weise mit der Mehrfeldermatrix 4 nach Einspiegelung in das Beobachtungsokular 34 visuell erkennbar. Wegen der flächengrößengleichen Spezialsymbole gestatten diese Teile der Mehrfeldermatrix 4 äquivalente Lichtmengendurchflüsse wie die Mehrzahl der uniform gestalteten Matrixfelder. In der in Figur 6 dargestellten Ausführungsvariante hätte das Dioden-Array 25 in analoger Weise entsprechende Spezial-Felder.

**Patentansprüche**

1. Verfahren zum Eingeben und/oder Sichtbarmachen und/oder Registrieren mindestens eines form-, größen- und ortsvariablen Meßfleckes in den(m) Beobachtungs- und/oder Aufnahme- und/oder Meßstrahlengang einer Kamera für optische Geräte, insbesondere Mikroskope, dadurch gekennzeichnet, daß eine im Meßstrahlengang in einer zur Okularzwischenbildebene des optischen Gerätes konjugierten Ebene vorgesehene, ortsfeste, gegebenenfalls rückwärtig beleuchtbare Mehrfeldermatrix (4) derart von einem Prozessor (22) angesteuert wird, daß sich die Transmissionscharakteristik der gesamten Mehrfeldermatrix (4) oder von mindestens einem geometrischen Teilbereich dieser Matrix spontan reversibel gemäß den nachfolgenden Verfahrensschritten ändert:

(a) ein Objekt (3) wird auf die Mehrfeldermatrix (4) abgebildet;

(b) der Prozessor (22) steuert nach Betätigung einer Auslösetaste alle Felder der Mehrfeldermatrix (4) einzeln nacheinander hell, wobei gleichzeitig das durch das jeweils hellgesteuerte Feld gelangende Licht gemessen und die erhaltenen Meßwerte einem Rechner (23) zugeführt werden;

(c) der Rechner (23) wertet die einzelnen gemessenen Helligkeitssignale aus und speichert die Meßwerte derjenigen Felder, die Objektbild-Strukturen bzw. -Strukturanteile aufweisen;

(d) der Prozessor (22) steuert alle Felder, welche Objektbild-Strukturen bzw. -Strukturanteile aufweisen, hell;

(e) der Rechner (23) ermittelt im Zusammenwirken mit einer fotoelektrischen Meßeinrichtung (17) die optimale Belichtungszeit durch Bestimmung des Verhältnisses der hellgesteuerten Felder zur Gesamtzahl aller Felder der Mehrfeldermatrix (4) sowie durch Berücksichtigung der Geometrie der hellgesteuerten Teilbereiche der Mehrfeldermatrix (4);

(f) die vom Rechner (23) ermittelten Zeitwerte werden einem fotografischen Verschluß-Steuerteil (7) zugeführt, welcher sodann in an sich bekannter Weise in Funktion tritt.

2. Verfahren nach Anspruch 1, gekennzeichnet, durch folgenden zusätzlichen Schritt:

(g) nachfolgendes visuelles Vergleichen des Objektbildes mit dem Meßfleckbild durch optisches Überlagern beider Bilder in der Okularzwischenbildebene des optischen Gerätes durch rückwärtige Beleuchtung der Mehrfeldermatrix (4).

3. Verfahren nach Anspruch 2, gekennzeichnet durch das Vertauschen der Reihenfolge der Schritte (f) und (g).

4. Verfahren zum Eingeben und/oder Sichtbarmachen und/oder Registrieren mindestens eines form-, größen- und ortsvariablen Meßfleckes in den(m) Beobachtungs- und/oder Aufnahme- und/oder Meßstrahlengang einer Kamera für optische Geräte, insbesondere Mikroskope, dadurch gekennzeichnet, daß ein im Meßstrahlengang in einer zur Okularzwischenbildebene des optischen Gerätes konjugierten ersten Ebene vorgesehenes Dioden-Array (25) und eine in einer zweiten, zur ersten Ebene konjugierten Ebene angeordnete, gegebenenfalls rückwärtig beleuchtbare Mehrfeldermatrix (4) derart von einem Prozessor (22) angesteuert werden, daß sich die Meßfeldcharakteristik des Dioden-Arrays (25) und die Transmissionscharakteristik der gesamten Mehrfeldermatrix (4) spontan reversibel gemäß den nachfolgenden Verfahrensschritten ändern:

(a) ein Objekt (3) wird auf das Dioden-Array (25) abgebildet;

(b) der Prozessor (22) steuert alle Felder des Dioden-Arrays (25) einzeln nacheinander an, wobei gleichzeitig das auf das jeweils angesteuerte Feld gelangende Licht gemessen und die einzelnen Meßwerte einem Rechner (23) zugeführt werden;

(c) der Rechner (23) wertet die einzelnen gemessenen Helligkeitssignale aus und speichert die Meßwerte derjenigen Felder des Dioden-Arrays (25), die Objektbild-Strukturen bzw. -Strukturanteile aufweisen;

(d) der Rechner (23) ermittelt die optimale Belichtungszeit durch die Bestimmung des Verhältnisses der Felder mit Objektstruktur zur Gesamtzahl aller Felder, durch die Berücksichtigung der Größe des Meßsignals sowie der Geometrie der an der Messung beteiligten Felder des Dioden-Arrays (25);

(e) die vom Rechner (23) ermittelten Zeitwerte werden einem fotografischen Verschluß-Steuerteil (7) zugeführt, welcher sodann in an sich bekannter Weise in Funktion tritt;

(f) Hellsteuern derjenigen Felder der Mehrfeldermatrix (4), welche den objektbildstrukturrelevanten Feldern des Dioden-Arrays (25) entsprechen, und Wegklappen eines Spiegels (16);

(g) nachfolgendes visuelles Vergleichen des Objektbildes mit dem auf der Mehrfeldermatrix (4) dargestellten Meßfleckbild durch optisches Überlagern beider Bilder in der Okularzwischenbildebene des optischen Gerätes durch rückwärtige Beleuchtung der Mehrfeldermatrix (4).

5. Verfahren nach Anspruch 4, gekennzeichnet, durch die nachfolgend aufgeführte Reihenfolge der Schritte

Schritte (a) bis (d),

Schritt (g),

Schritt (e).

6. Verfahren nach einem der Ansprüche 1 bis 5, dadurch gekennzeichnet, daß die die Belichtungszeit bestimmenden Meßwerte gespeichert und mit ihrer Hilfe Mehrfachbelichtungen einunddesselben Objektes (3) durchgeführt werden.

7. Verfahren nach mindestens einem der Ansprüche 1 bis 5, dadurch gekennzeichnet, daß der ansteuerbare geometrische Teilbereich aus mindestens einem Feld bzw. mindestens einer Zeile der Mehrfeldermatrix (4) bzw. des Dioden-Arrays (25) besteht.

8. Verfahren nach mindestens einem der vorhergehenden Ansprüche, dadurch gekennzeichnet, daß der ansteuerbare Teilbereich aus mindestens einer in der Mehrfeldermatrix (4) bzw. in dem Dioden-Array (25) örtlich benachbarten Gruppe von Feldern bzw. Zeilen besteht.

9. Verfahren nach mindestens einem der vorhergehenden Ansprüche, dadurch gekennzeichnet, daß der Prozessor für die Ermittlung der optimalen Form, der Größe und des Ortes des Meßfleckes die zu einer Zeile gehörenden Felder der Mehrfeldermatrix (4) gleichzeitig hellsteuert, so daß nacheinander alle Horizontal-Zeilen und anschließend alle Vertikal-Zeilen angesteuert werden, wobei ein in Abhängigkeit von dem jeweiligen Bildstrukturdetail unterschiedlich hohes Meßsignal von jeder Zeile gespeichert und anschließend von dem Rechner (23) gewertet und danach die Hellsteuerung nur derjenigen Felder erfolgt, die Objektbild-Strukturen bzw. -Strukturanteile aufweisen.

10. Verfahren nach mindestens einem der vorhergehenden Ansprüche, dadurch gekennzeichnet, daß dem Rechner (23) für die Ermittlung der gewünschten Form, der Größe und der Lage des Meßfleckes bzw. der Meßflecke für Registrierzwecke verwertbare Kontrastbereiche unter Berücksichtigung der Graustufenempfindlichkeit des jeweils in der Kamera des optischen Gerätes verwendeten Films vorher eingegeben (vorprogrammiert) wird.

11. Verfahren nach mindestens einem der vorhergehenden Ansprüche, dadurch gekennzeichnet, daß dem Rechner (23) für die Ermittlung der gewünschten Form, der Größe und der Lage des Meßfleckes bzw. der Meßflecke der für Registrierzwecke verwertbare Kontrastbereich manuell unter Anpassung an die Graustufenempfindlichkeit des jeweils in der Kamera des optischen Gerätes verwendeten Films eingegeben wird.

12. Verfahren nach mindestens einem der vorhergehenden Ansprüche, dadurch gekennzeichnet, daß dem Rechner (23) in Abhängigkeit vom jeweils verwendeten Filmmaterial ein Programmkorrekturfaktor für eine wahlweise stärkere Berücksichtigung und Bewertung der Signal-Maximalwerte (bei Positiv-Filmen) oder aber der Signal-Minimalwerte (bei Negativ-Filmen) eingegeben wird.

13. Verfahren nach mindestens einem der vorhergehenden Ansprüche, dadurch gekennzeichnet, daß der Rechner (23) etwaige Transmissionsinhomogenitäten einzelner in Wirkstellung befindlicher Felder bzw. Zeilen der Mehrfeldermatrix (4) oder des Dioden-Arrays (25) sowie den optisch bedingten Helligkeitsabfall zum Sehfeldrand automatisch korrigiert bzw. kompensiert.

14. Verfahren nach mindestens einem der vorhergehenden Ansprüche, dadurch gekennzeichnet, daß die vom Prozessor (22) angesteuerten Felder oder Zeilen einzeln oder gruppenweise ihre Transmissionscharakteristik in schneller und vorgebbarer Intervallfolge alternierend ändern.

15. Verfahren nach mindestens einem der vorhergehenden Ansprüche, dadurch gekennzeichnet, daß die Form(en), die Größe(n) und der (die) Ort(e) des Meßfleckes (der Meßflecke) manuell durch Abfahren der Kontur(en) des Objektbildes bestimmt und sodann abgespeichert wird(werden).

16. Verfahren nach mindestens einem der vorhergehenden Ansprüche, dadurch gekennzeichnet, daß der Prozessor (22) zunächst ein im Zentralbereich der Mehrfeldermatrix (4) liegendes Feld und sodann die daran angrenzenden Felder nacheinander — wahlweise einzeln oder in Gruppen — hellsteuert.

17. Verfahren nach Anspruch 16, dadurch gekennzeichnet, daß die sukzessive Hellsteuerung der aneinandergrenzenden Felder entlang einer vom Zentrum der Mehrfeldermatrix (4) ausgehenden spiralförmigen Linie erfolgt.

18. Vorrichtung zur Durchführung des Verfahrens nach mindestens einem der vorhergehenden Ansprüche, bestehend aus einem optischen Beobachtungsgerät mit zugeordneter Kamera (7, 9, 10) — insbesondere einer mit einem Mikroskop zusammenwirkenden Aufsatz- oder Einbaukamera — mit einer Einrichtung zur Messung der Helligkeit eines Objektdetails und mit Mitteln zur Sichtbarmachung des Detailfeldes und/oder des Objektbildes in der Zwischenbildebene des Okulars (31) des optischen Beobachtungsgerätes, wobei eine das Detailmeßfeld definierende Detailmeßfeldblendenanordnung in einer Funktionsebene, die eine zum Okularzwischenbild konjugierte Ebene ist, in einem Meßstrahlengang angeordnet ist, der über einen Strahlenumlenker (6), welcher sich in der optischen Achse des Beobachtungsgerätes befindet, mit dem Abbildungsstrahlengang optisch gekoppelt ist, und wobei — gegebenenfalls — ein Strahlenteiler (12) im Meßstrahlengang angeordnet ist, der Formatmarkierungen, Schärfekreuze usw. in den Meß- bzw. Beobachtungsstrahlengang einspiegelt, dadurch gekennzeichnet, daß die Detailmeßfeldblendenanordnung ortsfest gehalten und als Mehrfeldermatrix (4) mit spontan reversibel veränderbarer Transmissionscharakteristik jedes ihrer Felder ausgebildet ist (Fig. 1).

19. Vorrichtung nach Anspruch 18, dadurch gekennzeichnet, daß der Mehrfeldermatrix (4)

(a) ein Prozessor (22) zugeordnet ist;

(b) ein Lichtempfänger (17) nachgeordnet ist, der mit einer Speicher- und Rechnereinheit (23) verbunden ist, welche ihrerseits mit dem Prozessor (22) und

(c) mit einem Steuergerät (21) in funktioneller Verbindung steht, das einen in der Kamera (7, 9, 10) vorhandenen Verschluß (7) nach Maßgabe der ermittelten Helligkeitsmeßwerte steuert.

20. Vorrichtung nach mindestens einem der Ansprüche 18 und 19, dadurch gekennzeichnet, daß im Bereich des Meßstrahlengangs zusätzlich zur Mehrfeldermatrix (4) in einer weiteren, zur Okularzwischenbildebene konjugierten Ebene ein Dioden-Array (25) angeordnet ist, wobei dessen Einzeldioden

mit den entsprechenden Feldern der Mehrfeldermatrix (4) koordinatenmäßig verknüpft sind (Fig. 6).

21. Vorrichtung nach Anspruch 20, dadurch gekennzeichnet, daß das Dioden-Array (25) in analoger Weise wie die Mehrfeldermatrix (4) mit dem Prozessor (22) der Rechner- und Speichereinheit (23) sowie dem Steuergerät (21) verknüpft ist.

22. Vorrichtung nach mindestens einem der Ansprüche 18 und 19, dadurch gekennzeichnet, daß der Strahlenumlenker ein rotierender Sektorspiegel (26) ist, welcher derart im Abbildungsstrahlengang angeordnet ist, daß dessen jeweils in Wirkstellung befindlicher, vollverspiegelter Sektor den Meßstrahlengang in Richtung auf die Mehrfeldermatrix (4) umlenkt, und daß in der optischen Achse des Beobachtungsgerätes ein ein- und ausschiebbar gehalterter Spiegel (8) mit in Richtung zur Filmebene (10) nachgeordneter und mit dem Spiegel (8) mechanisch verbundenen Dunkelklappe (8a) zwischen dem Verschluß (7) und dem Kameraobjektiv (9) vorgesehen ist, welcher in Wirkstellung einen separaten Teilstrahlengang in die optische Achse des Beobachtungsgerätes zunächst in Richtung auf das Objekt (3) umlenkt (Fig. 5 und 7).

23. Vorrichtung nach Anspruch 22, dadurch gekennzeichnet, daß der Teilstrahlengang von einer Lichtquelle (15a) ausgeht, der als weitere optische Bauelemente eine Feldlinse (14b), eine mit geometrischen Kennungen, insbesondere mit Strich- und Formatmarkierungen, versehene Platte (13) und sodann eine weitere Linse (18) nachgeordnet sind (Fig. 3 bzw. 5).

24. Vorrichtung nach mindestens einem der vorhergehenden Ansprüche, dadurch gekennzeichnet, daß die Mehrfeldermatrix (4) aus einem elektrooptischen Material besteht.

25. Vorrichtung nach mindestens einem der vorhergehenden Ansprüche, dadurch gekennzeichnet, daß die Mehrfeldermatrix (4) aus einem ferroelektrischen Material besteht.

26. Vorrichtung nach mindestens einem der vorhergehenden Ansprüche, dadurch gekennzeichnet, daß die Mehrfeldermatrix (4) aus einem magnetooptischen Material besteht.

27. Vorrichtung nach Anspruch 24, dadurch gekennzeichnet, daß die Mehrfeldermatrix (4) eine Flüssigkristallmatrix ist.

28. Vorrichtung nach Anspruch 24, dadurch gekennzeichnet, daß die Mehrfeldermatrix (4) nematische Flüssigkristalle mit positiver dielektrischer Anisotropie enthält.

29. Vorrichtung nach Anspruch 24, dadurch gekennzeichnet, daß die Mehrfeldermatrix (4) eine elektrochrome Matrix ist.

30. Vorrichtung nach Anspruch 24, dadurch gekennzeichnet, daß die Mehrfeldermatrix (4) eine elektrophoretische Matrix ist.

31. Vorrichtung nach mindestens einem der Ansprüche 24 bis 30, dadurch gekennzeichnet, daß die einzelnen Felder(gruppen) oder Zeilen(gruppen) der Mehrfeldermatrix (4) aus unterschiedlichen Matrix-Materialien bestehen.

32. Vorrichtung nach Anspruch 31, dadurch gekennzeichnet, daß sich die unterschiedlichen Matrix-Materialien auf die einzelnen Felder(gruppen) bzw. Zeilen(gruppen) der Mehrfeldermatrix (4) derart verteilen, daß jeweils — vorzugsweise zentrosymmetrische — Zonen bzw. Sektoren bzw. anderweitig geometrisch strukturierte — beispielsweise schachbrettartige — Matrixteilbereiche gleicher Flächengröße, jedoch unterschiedlicher Matrixmaterialausstattung einander abwechseln.

33. Vorrichtung nach mindestens einem der vorhergehenden Ansprüche, dadurch gekennzeichnet, daß alle Einzelfelder der Mehrfeldermatrix (4) von gleicher Geometrie sind und einen gleichgroßen Flächeninhalt aufweisen.

34. Vorrichtung nach Anspruch 33, dadurch gekennzeichnet, daß die geometrische Form jedes Einzelfeldes ein Quadrat bzw. ein Rechteck bzw. eine Raute bzw. ein Parallelogramm bzw. ein Trapez bzw. ein Dreieck bzw. ein Sechseck ist.

35. Vorrichtung nach mindestens einem der vorhergehenden Ansprüche, dadurch gekennzeichnet, daß alle Einzelfelder der Mehrfeldermatrix (4) bei gleichgroßen Flächeninhalten voneinander abweichende Flächengeometrien aufweisen.

36. Vorrichtung nach mindestens einem der vorhergehenden Ansprüche, dadurch gekennzeichnet, daß einige der Einzelfelder der Mehrfeldermatrix (4) als flächengrößengleiche Formatbegrenzungs- oder Zentriersymbole — beispielsweise als Strichkreuz(e), Pfeil(e), «L»- oder «V»-förmige(r) Winkel, 90°-Bogen, Kreisring(e) usw. — ausgebildet und vorzugsweise punktsymmetrisch bezüglich des Mehrfeldermatrix-Zentrums auf der Mehrfeldermatrix (4) angeordnet sind.

37. Vorrichtung nach mindestens einem der vorhergehenden Ansprüche, dadurch gekennzeichnet, daß die Mehrfeldermatrix (4) eine von ihrem Zentrum radialstrahlig ausgehende Polkoordinatenstruktur aufweist, wobei alle entstehenden Einzelfelder von gleichgroßem Flächeninhalt sind.

38. Vorrichtung nach mindestens einem der vorhergehenden Ansprüche, dadurch gekennzeichnet, daß mindestens zwei Mehrfeldermatrizen gleicher oder unterschiedlicher geometrischer bzw. physikochemischer Ausbildung sandwichartig aufeinandergeschichtet, separat von dem Prozessor ansteuerbar und bifunktionell miteinander verknüpfbar im Meßstrahlengang angeordnet sind.

## Claims

1. Method for entering and/or making visible and/or recording at least one measurement spot of variable shape, size and location in the observation and/or recording and/or measurement beam path of a camera for optical instruments, in particular microscopes, characterised thereby, that a fixedly located multi-field matrix (4), which is provided in the measurement beam path in a plane conjugate with the intermediate eyepiece image plane of the optical instrument and in a given case illuminatable from the rear, is driven in such a manner by a processor (22) that the transmission characteristic of the entire multi-field matrix (4) or of at least a geometric partial region of this matrix spontaneously changes reversibly according to the following method steps:

(a) an object (3) is imaged onto the multi-field matrix (4),

(b) the processor (22) after actuation of an initiating key drives all fields of the multi-field matrix (4) individually one after the other to be bright, wherein the light getting through the field respectively driven bright is measured at the same time and the obtained measurement values are fed to a computer (23),

(c) the computer (23) evaluates the individual measured brightness signals and stores the measurement values of those fields which display object image structures or structure components,

(d) the processor (22) drives bright all fields which display object image structures or structure components,

(e) the computer (23) in co-operation with a photo-electric measuring equipment (17) determines the optimum illumination time through determination of the ratio of the fields driven bright to the total number of all fields of the multi-field matrix (4) as well as by consideration of the geometry of the partial regions driven bright of the multi-field matrix (4) and

(f) the time values determined by the computer (23) are fed to a photographic shutter control part (7), which then comes into function in an in itself known manner.

2. Method according to claim 1, characterised by the following additional step:

(g) subsequent visual comparison of the object image with the measurement spot image by optical superimposition of both images in the intermediate eyepiece image plane of the optical instrument by rearward illumination of the multi-field matrix (4).

3. Method according to claim 2, characterised by the interchange of the sequence of the steps (f) and (g).

4. Method for entering and/or making visible and/or recording at least one measurement spot of variable shape, size and location in the observation and/or recording and/or measurement beam path of a camera for optical instruments, in particular microscopes, characterised thereby, that a diode array (25), which is provided in the measurement beam path in a first plane conjugate with the intermediate eyepiece image plane of the optical instrument, and a multi-field matrix (4), which is arranged in a second plane conjugate with the first plane and is in a given case illuminatable from the rear, are driven in such a manner by a processor (22), that the measurement field characteristic of the diode array (25) and the transmission characteristic of the entire multi-field matrix (4) spontaneously change according to the following method steps:

(a) an object (3) is imaged onto the diode array (25),

(b) the processor (22) drives all fields of the diode array (25) individually one after the other, wherein the light getting to the respectively driven field is measured at the same time and the obtained measurement values are fed to a computer (23),

(c) the computer (23) evaluates the individual measured brightness signals and stores the measurement values of those fields of the diode array (25), which display object image structures or structure components,

(d) the computer (23) determines the optimum illumination time through determination of the ratio of the fields with object structure to the total number of all fields by the consideration of the magnitude of the measurement signal as well as the geometry of those fields of the diode array (25), which participate in the measurement,

(e) the time values determined by the computer (23) are fed to a photographic shutter control part (7), which then comes into function in an in itself known manner.

(f) driving bright those fields of the multi-field matrix (4), which correspond to those fields of the diode array (25), that are relevant to the object image structure, and tilting away of a mirror (16), and

(g) subsequent visual comparison of the object image with the measurement spot image, which is represented on the multi-field matrix (4), by optical superimposition of both images in the intermediate eyepiece image plane of the optical instrument by rearward illumination of the multi-field matrix (4).

5. Method according to claim 4, characterised by the sequence of the steps recited as following:

steps (a) to (d),
step (g) and
step (e).

6. Method according to one of the claims 1 to 5, characterised thereby, that the measurement values determining the illumination time are stored and multiple illuminations of one and the same object (3) are performed with their aid.

7. Method according to at least one of the claims 1 to 5, characterised thereby, that the drivable geometric partial region consists of at least one field of the multi-field matrix (4) or of at least one line of the diode array (25).

8. Method according to at least one of the preceding claims, characterised thereby, that the drivable partial region consists of at least one locally adjacent group of fields in the multi-field matrix (4) or of lines in the diode array (25).

9. Method according to at least one of the preceding claims, characterised thereby, that the processor for the determination of the optimum shape, the size and the location of the measurement spot drives bright at the same time those fields of the multi-field matrix (4), which belong to one line, so that all horizontal lines and subsequently all vertical lines are driven one after the other, wherein a measurement signal, which is differently large in dependence on the respective image structure detail, of each line is stored and subsequently evaluated by the computer (23) and the driving-bright thereafter takes place of only those fields which display object image structures or structure components.

10. Method according to at least one of the preceding claims, characterised thereby, that the contrast regions, which are evaluatable for recording purposes, subject to consideration of the grey scale sensitivity of the film respectively used in the camera of the optical instrument are previously entered (preprogrammed) into the computer (23) for the determination of the desired shape, the size and the location of the measurement spot or spots.

11. Method according to at least one of the preceding claims, characterised thereby, that the contrast region, which is evaluatable for recording purposes, subject to adaptation to the grey scale sensitivity of the film respectively used in the camera of the optical instrument is entered manually into the computer (23) for the determination of the desired shape, the size and the location of the measurement spot or spots.

12. Method according to at least one of the preceding claims, characterised thereby, that a program correction factor for a selectably stronger consideration and evaluation of either the maximum signal values (in the case of positive films) or of the minimum signal values (in the case of negative films) is entered into the computer (23) in dependence on the respectively used film material.

13. Method according to at least one of the preceding claims, characterised thereby, that the computer (23) automatically corrects or compensates for possible inhomogeneities in transmission of those individual fields of the multi-field matrix (4) or of those individual lines of the diode array (25), which are disposed in effective setting, as well as the optically caused drop in brightness towards the edge of the field of vision.

14. Method according to at least one of the preceding claims, characterised thereby, that the fields or lines driven by the processor (22) alternatingly in rapid and predeterminable interval sequence change their transmission characteristic individually or in groups.

15. Method according to at least one of the preceding claims, characterised thereby, that the shape(s), the size(s) and the location(s) of the measurement spot(s) is or are determined manually by tracing the outline(s) of the object image and then stored.

16. Method according to at least one of the preceding claims, characterised thereby, that the processor (22) drives bright initially a field lying in the central region of the multi-field matrix (4) and thereafter the fields adjoining thereat one after the other selectably either individually or in groups.

17. Method according to at least one of the preceding claims, characterised thereby, that the successive driving-bright of the fields, which adjoin one another, takes place along a spiral line going out from the centre of the multi-field matrix (4).

18. Device for the performance of the method according to at least one of the preceding claims and consisting of an optical observation instrument with associated camera (7, 9, 10), in particular an attachment camera or a built-in camera co-operating with a microscope, with an equipment for the measurement of the brightness of an object detail and with means for rendering the detail field and/or the object image visible in the intermediate image plane of the eyepiece (3) of the optical observation instrument, wherein a detail measurement field stop arrangement, which defines the detail measurement field, is arranged in a functional plane, which is a plane conjugate with the intermediate eyepiece image, in a measurement beam path which is optically coupled with the imaging beam path by way of a beam deflector (6), which is disposed in the optical axis of the observation instrument, and wherein a beam splitter (12) is in a given case arranged in the measurement beam path and reflects format markings, focussing crosses and so forth into either the measurement beam path or the imaging beam path, characterised thereby, that the detail measurement field stop arrangements is mounted in fixed location and constructed as multi-field matrix (4) with spontaneously reversibly variable transmission characteristic of each of its fields (Fig. 1).

19. Device according to claim 18, characterised thereby, that the multi-field matrix (4)

(a) is associated with a processor (22),

(b) has a light receiver (17) arranged downstream thereof, which is connected with a computer and storage unit (23), which in its turn stands in functional connection with the processor (22) and

(c) with a control device (21), which controls a shutter (7) present in the camera (7, 9, 10) in accordance with the ascertained brightness values.

20. Device according to at least one of the claims 18 and 19, characterised thereby, that a diode array (25) is arranged in a further plane, which is conjugate with the intermediate eyepiece image plane, in the region of the measurement beam path and in addition to the multi-field matrix (4), wherein the individual diodes of the diode array (25) are interlinked in terms of co-ordinates with the corresponding fields of the multi-field matrix (4) Fig. 6).

21. Device according to claim 20, characterised thereby, that the diode array (25) is interlinked in analogous manner like the multifield matrix (4) with the processor (22) and the computer and storage unit (23) as well as with the control device (21).

22. Device according to at least one of the claims 18 and 19, characterised thereby, that the beam deflector is a rotating sector mirror (26), which is arranged in the imaging beam path in such a manner that its fully silvered sector respectively disposed in effective setting deflects the measurement beam path in the direction of the multi-field matrix (4) and that a mirror (8), which is mounted to be pushable in and out, in the optical axis of the observation instrument is provided with a darkening flap (8a), which is arranged therebehind in the direction of the film plane (10) and mechanically connected with the mirror (8), is provided between the shutter (7) and the objective (9), which mirror (8) in effective setting deflects a separate partial beam path into the optical axis of the observation instrument initially in the direction of the object (3) (Figs. 5 and 7).

23. Device according to claim 22, characterised thereby, that the partial beam path emanates from a light source (15a), downstream of which a field lens (14b), a plate (13) provided with geometric identifications, in particular with line and format markings, and then a further lens (18) are arranged as further optical components (Fig. 3 or 5).

24. Device according to at least one of the preceding claims, characterised thereby, that the multi-field matrix (4) consists of an electro-optical material.

25. Device according to at least one of the preceding claims, characterised thereby, that the multi-field matrix (4) consists of a ferro-electric material.

26. Device according to at least one of the preceding claims, characterised thereby, that the multi-field matrix (4) consists of a magneto-optical material.

27. Device according to claim 24, chatacterised thereby, that the multi-field matrix (4) is a liquid crystal matrix.

28. Device according to claim 24, characterised thereby, that the multi-field matrix (4) contains nematic liquid crystals with positive dielectric anisotropy.

29. Device according to claim 24, characterised thereby, that the multi-field matrix (4) is an electrochromatic matrix.

30. Device according to claim 24, characterised thereby, that the multi-field matrix (4) is an electrophoretic matrix.

31. Device according to at least one of the claims 24 to 30, characterised thereby, that the individual fields (or groups thereof) or lines (or groups thereof) of the multi-field matrix (4) consist of different matrix materials.

32. Device according to claim 31, characterised thereby, that the different matrix materials are so distributed over the individual fields (or groups thereof) or lines (or groups thereof) of the multifield matrix (4) that preferably centre-symmetrical zones or sectors or otherwise geometrically structured, for example chessboardlike partial matrix regions of equal size in area, but of different matrix material composition each time alternate one with the other.

33. Device according to at least one of the preceding claims, characterised thereby, that all individual fields of the multi-field matrix (4) are of the same geometry and display an equally great area content.

34. Device according to claim 33, characterised thereby, that the geometric shape of each individual field is a square or a rectangle or a rhombus or a parallelogram or a trapezium or a triangle or a hexagon.

35. Device according to at least one of the preceding claims, characterised thereby, that all individual fields of the multi-field matrix (4) for equally great area content display area geometries one deviating from the other.

36. Device according to at least one of the preceding claims, characterised thereby, that some of the individual fields of the multi-field matrix (4) are constructed as format-limiting symbols or centring symbols of equally great area, for example as cross line(s), arrow(s), «L»-shaped or «V»-shaped angle(s), circular ring(s) and so forth and are arranged on the multi-field matrix (4) preferably in point-symmetry with respect to the centre of the multi-field matrix.

37. Device according to at least one of the preceding claims, characterised thereby, that the multi-field matrix (4) displays a polar co-ordinate structure going out radially from its centre, wherein all arising individual fields are of equally great area content.

38. Device according to at least one of the preceding claims, characterised thereby, that at least two multi-field matrices of equal or different geometric or physico-chemical construction are arranged in the measurement beam path, one superposed upon the other in the manner of a sandwich, to be drivable separately by the processor and bifunctionally interlinkable one with the other.

## Revendications

1. Procédé pour introduire et/ou visualiser et/ou enregistrer au moins un point de mesure variable en ce qui concerne la forme, la taille et la localisation dans la ou les trajectoires de rayons d'observation et/ou d'enregistrement et/ou de mesure d'une caméra pour appareils optiques, en particulier microscopes, caractérisé en ce qu'une matrice à champs multiples (4) fixe en position, éventuellement éclairable par l'arrière, prévue dans la trajectoire de rayons de mesure dans un plan conjugué au plan d'image intermédiaire d'oculaire de l'appareil optique est commandée par un processeur (22) de telle façon que la caractéristique de transmission de l'ensemble de la matrice à champs multiples (4) ou d'au moins une zone géométrique partielle de cette matrice se modifie spontanément de façon réversible selon les étapes de procédé suivantes:

(a) un objet (3) est représenté sur la matrice à champs multiples (4);

(b) le processeur (22) commande dans l'état illuminé, après actionnement d'une touche de déclenchement, tous les champs de la matrice à champs multiples (4) individuellement les uns après les autres, la lumière aboutissant à travers le champ commandé dans l'état illuminé à chaque fois étant mesurée simultanément et les valeurs de mesure obtenues étant conduites à un calculateur (23);

(c) le calculateur (23) évalue les différents signaux de luminosité mesurés et mémorise les valeurs de mesure des champs qui présentent des structures d'image d'objet ou des parties de structure d'image d'objet;

(d) le processeur (22) commande dans l'état illuminé tous les champs qui présentent des structures d'image d'objet ou des parties de structure d'image d'objet;

(e) le calculateur (23) détermine en coopération avec un dispositif de mesure photo-électrique (17) la durée d'éclairement optimale par détermination du rapport des champs commandés dans l'état illuminé au nombre total de tous les champs de la matrice à champs multiples (4) de même que par prise en compte de la géométrie des zones partielles commandées dans l'état illuminé de la matrice à champs multiples (4);

(f) les valeurs de durée déterminées par le calculateur (23) sont conduites à une partie de commande d'obturateur photographique (7), laquelle entre ensuite en fonction de façon connue en soi.

2. Procédé selon la revendication 1, caractérisé par l'étape supplémentaire suivante:

(g) comparaison visuelle consécutive de l'image d'objet avec l'image de point de mesure par superposition optique des deux images dans le plan d'image intermédiare de l'oculaire de l'appareil optique par éclairement par l'arrière de la matrice à champs multiples (4).

3. Procédé selon la revendication 2, caractérisé par l'échange de la succession des étapes (f) et (g).

4. Procédé pour introduire et/ou visualiser et/ou enregistrer au moins un point de mesure variable en ce qui concerne la forme, la taille et la localisation dans la ou les trajectoires de rayons d'observation et/ou d'enregistrement et/ou de mesure d'une caméra pour dispositifs optiques, en particulier microscopes, caractérisé en ce qu'une rangée de diodes (25) prévue dans la trajectoire de rayons de mesure dans un premier plan conjugué au plan d'image intermédiaire d'oculaire de l'appareil optique et qu'une matrice à champs multiples (4) éventuellement éclairable par l'arrière disposée dans un deuxième plan conjugué au premier plan sont commandées par un processeur (22) de telle façon que la caractéristique de champ de mesure de la rangée de diodes (25) et que la caractéristique de transmission de l'ensemble de la matrice à champs multiples (4) se modifient de façon spontanément réversible selon les étapes de procédé suivantes:

(a) un objet (3) est représenté sur la rangée de diodes (25);

(b) le processeur (22) commande individuellement les uns après les autres tous les champs de la rangée de diodes (25), la lumière aboutissant sur chaque champ commandé étant mesurée simultanément et les différentes valeurs de mesure étant conduites à un calculateur (23);

(c) le calculateur (23) évalue les différents signaux de luminosité mesurés et mémorise les valeurs de mesure des champs de la rangée de diodes (25) qui présentent des structures d'image d'objet ou des parties de structure d'image d'objet;

(d) le calculateur (23) détermine la durée optimale d'éclairement par la détermination du rapport des champs avec structure d'objet au nombre total de tous les champs, par prise en compte de la taille du signal de mesure ainsi que de la géométrie des champs de la rangée de diodes (25) impliqués dans la mesure;

(e) les valeurs de durée déterminées par le calculateur (23) sont conduites à une partie de commande d'obturateur photographique (7), qui entre ensuite en fonction de façon connue en soi;

(f) commande à l'état illuminé des champs de la matrice à champs multiples (4) qui correspondent aux champs de la rangée de diodes (25) qui sont pertinents pour la structure d'image d'objet, et éloignement par rabattement d'un miroir (16);

(g) comparaison visuelle consécutive de l'image d'objet avec l'image de point de mesure représentée sur la matrice à champs multiples (4) par superposition optique des deux images dans le plan d'image intermédiaire d'oculaire de l'appareil optique par éclairement par l'arrière de la matrice à champs multiples (4).

5. Procédé selon la revendication 4, caractérisé par la succession suivante des étapes

Etapes (a) à (d),

Etape (g),

Etape (e).

6. Procédé selon l'une des revendications 1 à 5, caractérisé en ce que les valeurs de mesure déterminant la durée d'éclairement sont mémorisées et qu'à l'aide de celles-ci sont réalisés des éclairements multiples d'un seul et même objet (3).

7. Procédé selon au moins l'une des revendications 1 à 5, caractérisé en ce que la zone géométrique partielle commandable consiste en au moins un champ ou en au moins une ligne de la matrice à champs multiples (4) ou de la rangée de diodes (25).

8. Procédé selon au moins l'une des revendications précédentes, caractérisé en ce que la zone commandable partielle consiste en au moins un groupe de champs ou de lignes voisin dans la matrice à champs multiples (4) ou dans la rangée de diodes (25).

9. Procédé selon au moins l'une des revendications précédentes, caractérisé en ce que le processeur commande dans l'état illuminé simultanément les champs appartenant à une ligne de la matrice à champs multiples (4) pour la détermination de la forme, de la taille et de la localisation optimale du point de mesure, de sorte que toutes les lignes horizontales puis toutes les lignes verticales sont commandées successivement, un signal de mesure de chaque ligne dont l'importance dépend du détail de structure d'image correspondant étant mémorisé et étant ensuite évalué par le calculateur (23) puis la commande à l'état lumineux uniquement des champs qui présentent des structures d'image d'objet ou des parties de structure d'image d'objet ayant lieu.

10. Procédé selon au moins l'une des revendications précédentes, caractérisé en ce que des zones de contraste utilisables dans des buts d'enregistrement sont introduites (pré-programmées) dans le calculateur 23 pour la détermination de la forme, de la taille et de la position souhaitée du point de mesure ou des points de mesure en tenant compte de la sensibilité à l'échelle des gris du film utilisé à chaque fois dans la caméra de l'instrument optique.

11. Procédé selon au moins l'une des revendications précédentes, caractérisé en ce que la zone de contraste utilisable dans des buts d'enregistrement est introduite manuellement dans le calculateur (23) pour la détermination de la forme, de la taille et de la position souhaitée du point de mesure ou des points de mesure avec adaptation à la sensibilité à l'échelle des gris du film utilisé à chaque fois dans la caméra de l'appareil optique.

12. Procédé selon au moins l'une des revendications précédentes, caractérisé en ce qu'un facteur de correction de programme pour une prise en compte et une évaluation plus forte des valeurs maximales de signal (dans le cas de films positifs) ou des valeurs minimales de signal (dans le cas de films négatifs) est introduit dans le calculateur (23) en fonction du matériau de film utilisé à chaque fois.

13. Procédé selon au moins l'une des revendications précédentes, caractérisé en ce que le calculateur (23) corrige ou compense automatiquement d'éventuelles inhomogénéités de transmission de champs ou de lignes individuelles qui se trouvent en position active de la matrice à champs multiples (4) ou de la rangée des diodes (25) ainsi que la chute de luminosité déterminée de façon optique au bord du champ visuel.

14. Procédé selon au moins l'une des revendications précédentes, caractérisé en ce que les champs ou lignes commandés par le processeur (22) modifient de façon alternée isolément ou en groupes leur caractéristique de transmission suivant une succession d'intervalles plus rapide et déterminable au préalable.

15. Procédé selon au moins l'une des revendications précédentes, caractérisé en ce que la ou les formes, la ou les tailles et la ou les localisations du point de mesure ou des points de mesure est ou sont déterminées manuellement en parcourant le contour ou les contours de l'image objet puis sont mémorisés.

16. Procédé selon au moins l'une des revendications précédentes, caractérisé en ce que le processeur (22) commande dans l'état lumineux d'abord un champ situé dans la zone centrale de la matrice à champs multiples (4) puis les champs voisins l'un après l'autre, au choix isolément ou en groupes.

17. Procédé selon la revendication 16, caractérisé en ce que la commande successive dans l'état lumineux des champs voisins les uns des autres a lieu suivant une ligne en forme de spirale partant du centre de la matice à champs multiples (4).

18. Dispositif pour la mise en oeuvre du procédé selon au moins l'une des revendications précédentes, consistant en un appareil d'observation optique avec une caméra associée (7, 9, 10), en particulier une caméra d'adaptation ou incorporée coopérant avec un microscope, avec un dispositif pour mesurer la luminosité d'un détail d'objet et avec des moyens pour la visualisation du champ de détail et/ou de l'image de l'objet dans le plan d'image intermédiaire de l'oculaire (31) de l'appareil d'observation optique, un dispositif de diaphragme de champ de mesure de détail définissant le champ de mesure de détail étant disposé dans un plan de fonction qui est un plan conjugué à l'image intermédiaire de l'oculaire, dans une trajectoire de rayons de mesure qui est couplée optiquement avec la trajectoire de rayons de représentation par l'intermédiaire d'un déviateur de rayons (6) qui se trouve dans l'axe optique de l'appareil d'observation, et un dispositif de fractionnement de rayons (12) qui réfléchit des marquages de format, des croix de mise au point, etc., dans la trajectoire de rayons de mesure ou de rayons d'observation étant éventuellement disposé dans la trajectoire de rayons de mesure, caractérisé en ce que le dispositif de diaphragme de champ de mesure de détail est maintenu fixe en position et est sous forme de matrice à champs multiples (4) avec une caractéristique de transmission de chacun de ses champs modifiable de façon réversible et spontanée (figure 1).

19. Dispositif selon la revendication 18, caractérisé en ce qu'à la matrice à champs multiples (4)

(a) est associé un processeur (22);

(b) fait suite un récepteur de lumière (17) qui est relié à une unité de mémoire et de calculateur (23) qui, à son tour, est en liaison fonctionnelle avec le processeur (22) et

(c) est lié un appareil de commande (21) qui commande un obturateur (7) disponible dans la caméra (7, 9, 10) selon les valeurs de mesure de luminosité déterminées.

20. Dispositif selon au moins l'une des revendications 18 et 19, caractérisé en ce qu'une rangée de diodes (25) est disposée dans le domaine de la trajectoire de rayons de mesure en addition à la matrice à champs multiples (4) dans un autre plan conjugué au plan d'image intermédiaire d'oculaire, les différentes diodes de cette rangée étant combinées selon les coordonnées avec les champs correspondants de la matrice à champ multiple (4) (figure 6).

21. Dispositif selon la revendication 20, caractérisé en ce que la rangée de diodes (25) est combinée avec le processeur (22) et l'unité de calculateur et de mémoire (23) ainsi qu'avec l'appareil de commande (21) de façon analogue à la matrice à champs multiples (4).

22. Dispositif selon au moins l'une des revendications 18 et 19, caractérisé en ce que le déviateur de rayons est un miroir à secteurs tournant (26) qui est disposé dans la trajectoire de rayons de représentation, de telle façon que son secteur pleinement réfléchissant qui se trouve à chaque fois en position active dévie la trajectoire de rayons de mesure dans la direction de la matrice à champs multiples (4), et en ce que dans l'axe optique de l'appareil d'observation, est prévu un miroir (8) maintenu de façon à pouvoir être inséré et retiré entre l'obturateur (7) et l'objectif de caméra (9) avec un volet obscur (8a) disposé en aval dans la direction du plan de film (10) et relié mécaniquement au miroir (8), lequel, en position active, dévie une trajectoire de rayons partiels séparée dans l'axe optique de l'appareil d'observation d'abord en direction de l'objet (3) (figures 5 et 7).

23. Dispositif selon la revendication 22, caractérisé en ce que la trajectoire de rayons partiels provient d'une source lumineuse (15a) à laquelle succèdent en tant qu'autres éléments optiques une lentille de champ (14b), une plaque (13) munie d'identifications géométriques et en particulier de marquages de trait et de format, puis une autre lentille (18) (figure 3 ou 5).

24. Dispositif selon au moins l'une des revendications précédentes, caractérisé en ce que la matrice à champs multiples (4) consiste en un matériau électro-optique.

25. Dispositif selon au moins l'une des revendications précédentes, caractérisé en ce que la matrice à champs multiples (4) consiste en un matériau ferroélectrique.

26. Dispositif selon au moins l'une des revendications précédentes, caractérisé en ce que la matrice à champs multiples (4) consiste en un matériau magnéto-optique.

27. Dispositif selon la revendication 24, caractérisé en ce que la matrice à champs multiples (4) est une matrice à cristaux liquides.

28. Dispositif selon la revendication (24), caractérisé en ce que la matrice à champs multiples (4) contient des cristaux liquides nématiques avec une anisotropie diélectrique positive.

29. Dispositif selon la revendication 24, caractérisé en ce que la matrice à champs multiples (4) est une matrice électro-chrome.

30. Dispositif selon la revendication 24, caractérisé en ce que la matrice à champs multiples (4) est une matrice électrophorétique.

31. Dispositif selon au moins l'une des revendications 24 à 30, caractérisé en ce que les différents champs ou groupes de champs ou les différentes lignes ou groupes de lignes de la matrice à champs multiples (4) consistent en des matériaux de matrice différents.

32. Dispositif selon la revendication 31, caractérisé en ce que les différents matériaux de matrice se répartissent sur les différents champs ou groupes de champs ou les différentes lignes ou groupes de lignes de la matrice à champs multiples (4) de telle façon qu'alternent les uns par rapport aux autres des zones ou des secteurs de préférence centro-symétriques ou d'autres zones partielles de matrice à structure géométrique différente, par exemple sous forme d'échiquier, de même superficie mais en des matériaux de matrice différents.

33. Dispositif selon au moins l'une des revendications précédentes, caractérisé en ce que tous les différents champs de la matrice à champs multiples (4) sont de géométrie identique et présentent la même superficie.

34. Dispositif selon la revendication 33, caractérisé en ce que la forme géométrique de chaque champ individuel est un carré ou un rectangle ou un losange ou un parallélogramme ou un trapèze ou un triangle ou un hexagone.

35. Dispositif selon au moins l'une des revendications précédentes, caractérisé en ce que tous les champs différents de la matrice à champs multiples (4) présentent des géométries de surface différant les unes des autres pour des superficies identiques.

36. Dispositif selon au moins l'une des revendications précédentes, caractérisé en ce que quelques uns des différents champs de la matrice à champs multiples (4) sont sous forme de symboles de limitation de format ou de centrage de même superficie, par exemple sous forme de réticule(s), de flèche(s), d'angle(s) sous forme de «L» ou de «V», d'arc(s) de 90°, de couronne(s), etc., et sont disposés sur la matrice à champs multiples (4) de préférence à symétrie ponctuelle par rapport au centre de la matrice à champs multiples.

37. Dispositif selon au moins l'une des revendications précédentes, caractérisé en ce que la matrice à champs multiples (4) présente une structure de coordonnées polaire rayonnant de son centre, tous les champs individuels résultants étant de même superficie.

38. Dispositif selon au moins l'une des revendications précédentes, caractérisé en ce qu'au moins deux matrices à champs multiples de constitution géométrique ou physico-chimique identique ou différente sont superposées l'une sur l'autre en sandwich, sont commandables séparément par le processeur et sont disposées dans la trajectoire de rayons de mesure de façon à pouvoir être combinées entre elles de façon bifonctionnelle.

Fig. 1

Fig. 2

Fig. 3

Fig. 4

Fig. 5

Fig. 7

Fig. 6